# EUROPÄISCHE PATENTANMELDUNG

(11) **EP 0 811 808 A2**
(43) Veröffentlichungstag der Anmeldung: **10.12.1997**
(21) Anmeldenummer: 97104823.6
(22) Anmeldetag: 21.03.1997
(51) Int. Cl.: F24D 3/14

(54) **Verlegesystem für Fussboden-Heizungsrohre**

(30) Priorität: 29.05.1996 DE 29609497 U
(71) Anmelder: D.F. LIEDELT " VELTA" PRODUKTIONS- UND VERTRIEBS-GMBH, 22851 Norderstedt (DE)
(72) Erfinder: Stüfen, Heino, 22397 Hamburg (DE); Wenting, Manfred, 22848 Norderstedt (DE)
(74) Vertreter: von Raffay, Vincenz, Dipl.-Ing.

(57) **Zusammenfassung**

Das Verlegesystem für Fußbodenheizungsrohre weist genoppte, rechteckige Trägerelemente (1) auf, die aus einer Dämmschicht (3) aus aufgeschäumtem Kunststoff, vorzugsweise Polystyrol, und einer tiefgezogenen Verlegefolie (2) aus Kunststoff, vorzugsweise Polystyrol, mit Noppen zum Halten der Heizungsrohre bestehen. Weiterhin sind Randstreifen (11,12) vorgesehen, die aus einer an der Wand anliegenden Dämmschicht aus aufgeschäumtem Kunststoff, vorzugsweise Polyethylen, und einer Übergangsfolie (12,13) aus Kunststoff, vorzugsweise Polyethylen, bestehen. Um das Verlegesystem möglichst wirtschaftlich und mit möglichst geringem Abfall, also umweltfreundlich, einzusetzen, wird die Dämmschicht (3) und die tiefgezogene Verlegefolie (2) mit ihren Noppen lösbar ineinandergesteckt. An zwei aneinanderstoßenden Kanten steht die Verlegefolie (2) mit einer Noppenreihe (6) (Raster) über die Dämmschicht (3) über. Die Noppen (7) der Verlegefolie weisen an den beiden anderen Kanten, an denen sie nicht überstehen, einen etwas geringeren Querschnitt auf, so daß die Noppen (7) in die anderen Noppen (6) steckbar sind. Die Noppen (6) der Verlegefolie, die nicht den geringeren Querschnitt aufweisen, sind derart elastisch, daß sie eineinanderdrückbar sind.

## Beschreibung

Die Erfindung betrifft ein Verlegesystem nach dem Oberbegriff des Anspruches 1.

Derartige Verlegesysteme werden verwendet, um auf einem Betonboden oder dergleichen eine Warmwasserheizung zu installieren. Die Noppen sind in einem bestimmten Rastermaß, beispielsweise fünf Zentimeter, voneinander entfernt angeordnet. Sie sind so dimensioniert und geformt, daß mit ihrer Hilfe die Heizungsrohre oder Schläuche verlegt und gehalten werden können. Die Schläuche werden in die Zwischenräume zwischen den Noppen eingedrückt, wobei gerade und gekrümmte Verläufe möglich sind. Gleichzeitig dient das Verlegesystem der Wärme- und Trittschalldämmung nach unten. Die Verlegefolie schützt die darunterliegenden Deckschichten gegen dünnflüssigen Estrich. Weiterhin werden Schallbrücken durch durchlaufenden Estrich vermieden. Die Randstreifen sorgen in Verbindung mit dem Randdämmstreifen für eine Abdichtung im Randbereich.

Bei einem bekannten System der eingangs genannten Art werden die Trägerelemente, die aus Dämmschicht und Verlegefolie bestehen, beim normalen Verlegen dadurch miteinander verbunden, daß an jeweils zwei aneinanderangrenzenden Seiten entsprechend ausgebildete Hakenfalze nach Art einer Nut- und Federverbindung vorgesehen sind. Diese Hakenfalze sind in der Dämmschicht ausgebildet. Eine Seite weist einen nach unten gerichteten Hakenfalz und die angrenzenden Seite des nächsten Trägerelementes einen nach oben gerichteten Hakenfalz auf. Hierdurch können die Trägerelemente dicht und fest miteinander verbunden verlegt werden. Probleme treten auf, wenn, bedingt durch die Raummaße, die Trägerelemente verkleinert, d.h. geschnitten werden müssen. Hierbei werden die mit dem Hakenfalz versehenen Ränder mehr oder weniger breit abgeschnitten, wobei, bedingt durch das Raummaß, auch durch die Noppen geschnitten werden muß. Die abgeschnittenen, nicht mehr verwendbaren Trägerelemente müssen dann entsorgt werden. Dieses ist schwierig, da sie aus unterschiedlichen Materialien, nämlich einmal der aufgeschäumten Dämmschicht und zum anderen der Folie bestehen. Diese Materialien sind, da die Folie aufkaschiert ist, nicht voneinander zu trennen. Eine umweltgerechte Entsorgung ist daher kaum möglich.

Aus dem DE-GM 84 13 516.6 U1 ist ein Verlegesystem für eine Elektrofußbodenheizung bekannt, das eine Verlegefolie mit vorstehenden Noppen aufweist, die der Anordnung und Positionierung der Heizkabel dienen. An einem Rand sind die Noppen - dort Stütznocken genannt - in ihrer Höhe und im Querschnitt etws kleiner, so daß sie in die Noppen des angrenzenden Randes passen, und so eine druckknopfartige Verbindung möglich ist. Dieses bekannte Verlegesystem weist eine zusätzliche Dämmschicht nicht auf. Auch sind die Noppen, um eine druckknopfartige Verbindung zu ermöglichen, unterschiedlich groß ausgebildet. Schließlich werden Randstreifen nicht eingesetzt.

Der Erfindung liegt daher die Aufgabe zugrunde, ein Verlegesystem der eingangs genannten Art zu schaffen, das einfacher und damit wirtschaftlicher verlegt werden kann, seinen Anforderungen hinsichtlich Dämmung und Abdeckung gegen Estrich in hohem Maße gerecht wird und bei dessen Verlegung ein möglichst geringer Abfallanteil entsteht, der dann aber umweltfreundlich entsorgt werden kann.

Diese Aufgabe wird grundsätzlich durch das Kennzeichen des Anspruches 1 gelöst.

Bei dem erfindungsgemäßen Verlegesystem ist die Verlegefolie nicht auf die Dämmschicht aufkaschiert, sondern Dämmschicht und Verlegefolie sind lösbar miteinander dadurch verbunden, daß die Noppen der Dämmschicht in die Noppen der Verlegefolie gesteckt werden. Hierdurch ist es möglich, bei Abfällen Verlegefolie und Dämmschicht wieder voneinander zu trennen. Diese Art der Ausbildung macht es aber auch möglich, die einzelnen Trägerelemente dadurch miteinander zu verbinden, daß nicht besondere Hakenfalze in der Dämmschicht vorgesehen sind, sondern daß die Noppen der Verlegefolie ineinandergesteckt bzw. gedrückt werden. Hierzu ist bei jedem vollständigen Trägerelement an zwei aneinander-stossenden Kanten eine einseitige Noppenreihe im Rastermaß vorgesehen, unter der sich eine Dämmschicht nicht befindet. Die Noppen der beiden anderen gegenüberliegenden Reihen dieses Trägerelementes weisen in einer Reihe Noppen auf, die einen etwas geringeren Querschnitt haben, so daß die Noppen der Trägerfolie, unter denen die Dämmschicht fehlt, einfach und leicht auf die Noppen des angrenzenden Trägerelementes gesteckt werden können. Dieses ermöglicht ein schnelles und einfaches Verlegen. Die einzelnen, vollständigen Trägerelemente lassen sich aufgrund der Anordnung der einseitigen Noppenreihen, unter denen die Dämmschicht fehlt, und der gegenüberliegenden Noppenreihen mit Noppen kleineren Querschnittes, leicht und formschlüssig miteinander verbinden. Im Randbereich, wo, bedingt durch die Raumgeometrie, die Verlegung einer vollständigen Platte nicht möglich ist, wird diese Platte geschnitten. Der abgeschnittene Teil des Trägerelementes, der an dieser Stelle nicht verwendbar ist, kann aber an einer anderen Stelle verwendet werden, und zwar dadurch, daß die Dämmschicht unter einer Reihe der Noppen entfernt wird. Diese Noppen lassen sich dann mit einem vertretbaren Kraftaufwand auf die angrenzenden gleichgeformten und gleichdimensionierten Noppen drücken, da sämtliche Noppen entsprechend elastisch ausgebildet sind. Dieses geschieht durch geeignete Materialauswahl und Formgebung der Noppen der Verlegefolie. Abfälle, die nicht mehr verwendbar sind, werden dadurch entsorgt, daß Dämmschicht und Verlegefolie voneinander getrennt werden und so je nach ihren Materialeigenschaften wieder verwandt werden können.

In besonders vorteilhafter Weise kann das Verlegesystem so ausgestaltet sein, wie in Anspruch 4 angegeben. Wenn das Verlegesystem so ausgestaltet ist, werden im Randbereich entsprechende, besonders gestaltete Ausgleichselemente eingesetzt. Diese sind ebenfalls zweiteilig "ausgebildet", d.h. sie bestehen aus einer Dämmschicht und einer tiefgezogenen Ausgleichsfolie. Die Ausgleichsdämmschicht weist aber keine Noppen auf, so daß eine glatte Oberfläche vorliegt. Die Ausgleichsfolie weist lediglich eine einseitige Noppenreihe und einen verhältnismäßig breiten Abschnitt oder Streifen ohne Noppen auf. Im Randbereich wird dann zuerst die Ausgleichsdämmschicht verlegt, um den Abstand zwischen Trägerelement und Wand zu überbrücken. Dann werden die Noppen der Ausgleichsfolie auf die angrenzende Reihe der Verlegefolie des Trägerelementes gesteckt. Der Streifen oder Abschnitt ohne Folie liegt auf der Dämmschicht auf und deckt diese bis zum Rand ab. Hier wird die Verbindung mit dem vorhandenen Randstreifen hergestellt, und zwar dadurch, daß die Übergangsfolie des Randstreifens unter den glatten Streifen der Ausgleichsfolie gesteckt wird. Im Randbereich ist daher eine gute Anpassung an die Raumgeometrie möglich, wobei gleichzeitig die geforderte Abdeckung gegen Estrich und Anmachwasser sichergestellt wird.

Im folgenden wird die Erfindung unter Hinweis auf die Zeichnung anhand eines Ausführungsbeispieles näher erläutert.

Es zeigt:
- Fig. 1: eine perspektivische Ansicht zweier Trägerelemente nach dem Verlegessystem der Erfindung;
- Fig. 2: zwei gleiche, normale Noppen in der tiefgezogenen Verlegefolie;
- Fig. 2a: zwei Noppen der tiefgezogenen Verlegefolie, die unterschiedlich gestaltet sind; die untere weist einen etwas geringeren Querschnitt auf;
- Fig. 3: eine Draufsicht auf einen Teil eines Raumes mit den verlegten Elementen nach dem Verlegesystem der Erfindung; und
- Fig. 4: einen Schnitt gemäß der Linie A-A der Fig. 3.

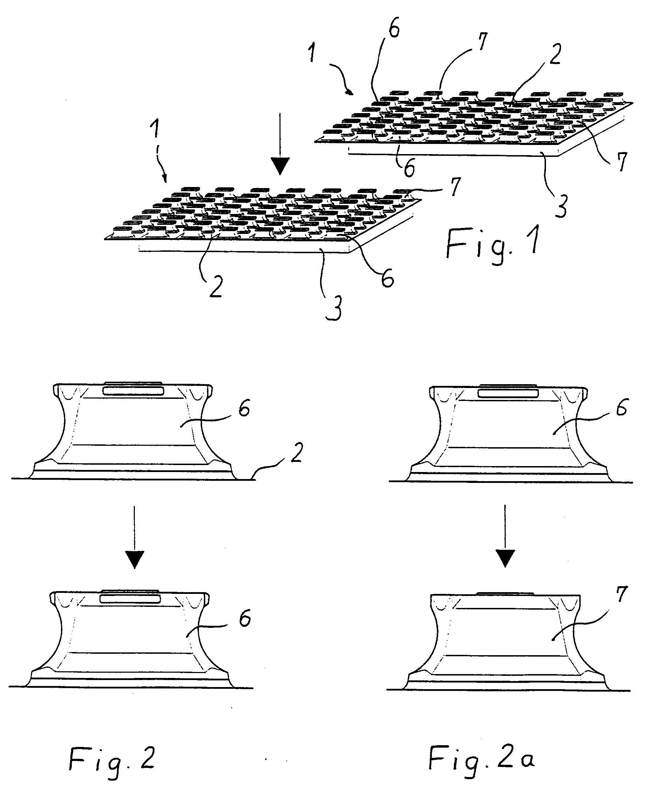

Die in Fig. 1 dargestellten Trägerelemente 1 des Verlegesystems werden durch eine Dämmschicht 3 und eine tiefgezogene Folie 2 gebildet, die beide aus Polystyrol bestehen, wobei das Material der Dämmschicht 3 aufgeschäumt ist. Beide Teile 2 und 3 weisen Noppen auf, so daß diese beiden Teile, die das Trägerelement 1 bilden, mechanisch miteinander verbunden sind, aber wieder voneinander getrennt werden können. Die Noppen der Dämmschicht 3 liegen in den Hohlräumen der Noppen 6,7 der Verlegefolie 2. Die Noppen der Verlegefolie dienen der Fixierung und Halterung der nichtgezeigten Warmwasserheizungsrohre. Diese werden in herkömmlicher Weise in gewünschten Formen und Abständen in die Zwischenräume zwischen den Noppen eingelegt, bevor der Estrich aufgebracht wird.

Jede Verlegefolie 2 weist unterschiedliche Noppenformen auf. Die normale Noppe 6 hat einen im wesentlichen quadratischen Querschnitt und erweitert sich nach oben, so daß Hinterschneidungen entstehen. Eine etwas kleinere Noppe ist mit 7 bezeichnet. Hier ist der Querschnitt, insbesondere im oberen Bereich, geringer. Sämtliche Noppen sind in einem Rastermaß angeordnet, wobei dieses beispielsweise 5 cm beträgt.

Die Noppen 7 geringeren Querschnittes sind an zwei aneinanderangrenzenden Kanten in einer Reihe vorgesehen, so wie es in Fig. 1 dargestellt ist. Es sind also zwei Kanten jedes Trägerelementes 1 vorhanden, an denen etwas "kleinere Noppen" vorhanden sind. Bei der Rechteckform handelt es sich um eine kurze und eine lange Kante. Die beiden anderen Kanten weisen "normale" Noppen 6 auf. Unter diesen Noppen an diesen beiden anderen Kanten fehlt aber die Dämmschicht 3, so daß, wie durch den Pfeil in Fig. 1 angedeutet, entsprechend nebeneinanderliegende Trägerelemente 1 miteinander verbunden und verhakt werden können. Die Noppen haben also zwei Aufgaben, einmal die Verbindung der Trägerelemente herzustellen, und zum anderen die Heizungsrohre zu führen und zu halten.

Die "normalen" Noppen 6 der Verlegefolie 2 sind aber so geformt und die Materialauswahl für die Verlegefolie ist so getroffen, daß auch normale Noppen ineinandergedrückt werden können. Hierdurch ist lediglich ein etwas größerer Kraftaufwand erforderlich. Dieses ist dann nötig und von Vorteil, wenn Trägerelementabschnitte verwendet werden sollen. Bedingt durch die Raumgeometrie kommt es vor, daß Trägerelemente zugeschnitten werden müssen. Die an dieser Stelle nicht verwendbaren, abgeschnittenen Trägerelemente, müssen dann aber nicht unbedingt entsorgt werden, sondern sie können an anderer Stelle dadurch wiederverwendet werden, daß die Dämmschicht unter einer Reihe der Noppen 6 entfernt wird, und daß diese Noppen 6 dann ebenfalls über normale Noppen 6 des angrenzenden Trägerelementes gedrückt werden.

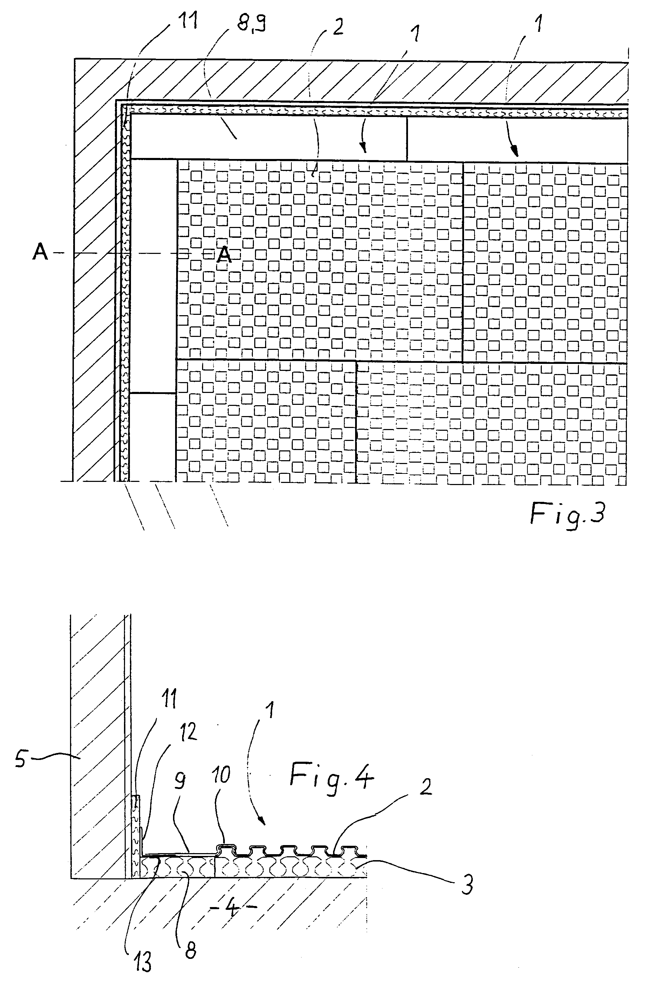

Beim Anschluß am Rand und bei Verlegung im Randbereich sind besondere Maßnahmen getroffen, die beim Betrachten der Fig. 3 und 4 deutlich werden. Unmittelbar am Rand, d.h. an der Wand anliegend, ist eine Dämmschicht 11 mit einer Übergangsfolie 12,13 vorgesehen. Zwischen dem Trägerelement 1 und der Dämmschicht 11 ist ein besonders ausgestaltetes Ausgleichselement vorgesehen. Dieses besteht aus einer Ausgleichsdämmschicht 8 ohne Noppen und einer Ausgleichsfolie 9 mit einer Noppenreihe 10. Der übrige Abschnitt der Ausgleichsfolie 9 ist glatt und noppenfrei. In diesem Randbereich wird zuerst die Ausgleichsdämmschicht 8 in den Zwischenraum zwischen Dämmschicht 11 des Randstreifens und dem Trägerelement 1 verlegt. Auf diese Dämmschicht wird dann die Ausgleichsfolie 9 aufgelegt, wobei die Noppen 10, die den Noppen 6 entsprechen, auf die Noppen der angrenzenden Reihe des Trägerelementes 1 aufgedrückt werden. Der Streifen 13 der Übergangsfolie liegt dann unter dem glatten Abschnitt der Ausgleichsfolie 9. Hierdurch entsteht auch im Randbereich eine dichte und sichere Verlegung.

Durch diese Ausgleichselemente ist es nicht mehr erforderlich, die Trägerelemente durch die Noppen zu schneiden, um eine exakte Anpassung zu ermöglichen. Dieses ist bei Verwendung der Ausgleichselemente nicht mehr erforderlich. Das Schneiden erfolgt im Rastermaß zwischen den Noppen. Die Ausgleichselemente haben nur dort Noppen, wo die Verbindung mit dem angrenzenden Trägerelement hergestellt werden soll. Die einseitige Anordnung der Noppen auf der Ausgleichsfolie stellt einerseits die sichere Verbindung mit dem angrenzenden Trägerelement sicher, sorgt aber andererseits für einen glatten Abschnitt, der über der Übergangsfolie des Randstreifens liegt. Dieser Streifen der Übergangsfolie wird praktisch zwischen der Ausgleichsfolie 9 und der Dämmschicht 8 eingeklemmt. Es entsteht eine dichte Verbindung gegen Fließestrich. Der Ausgleich an unterschiedliche Randgeometrie ist durch einfaches Schneiden der Ausgleichselemente möglich. Das Schneiden der Trägerelemente erfolgt nur im Raster, beispielsweise 5 cm und nicht durch die Noppen.

## Patentansprüche

1. Verlegesystem für Fußbodenheizungsrohre mit genoppten, rechteckigen Trägerelementen (1), die aus einer Dämmschicht (3) aus aufgeschäumtem Kunststoff, vorzugsweise Polystyrol und einer tiefgezogenen Verlegefolie (2) aus Kunststoff, vorzugsweise Polystyrol, mit Noppen zum Halten der Heizungsrohre bestehen, und mit Randstreifen (11,12), die aus einer an der Wand anliegenden Dämmschicht aus ausgeschäumtem Kunststoff, vorzugsweise aus Polyethylen, und einer Übergangsfolie (12 und 13) aus Kunststoff, vorzugsweise Polyethylen, bestehen,
dadurch gekennzeichnet,
daß die Dämmschicht (3) und die tiefgezogene Verlegefolie (2) mit ihren Noppen lösbar ineinandergesteckt sind,
daß an zwei aneinanderstoßenden Kanten die Verlegefolie (2) mit einer Noppenreihe (6) (Raster) über die Dämmschicht (3) übersteht,
daß die Noppen (7) der Verlegefolie an den beiden anderen Kanten, an denen sie nicht überstehen, einen etwas geringeren Querschnitt aufweisen, so daß diese Noppen (7) in die anderen Noppen (6) steckbar sind,
daß die Noppen (6) der Verlegefolie, die nicht den geringeren Querschnitt aufweisen, derart elastisch sind, daß sie ineinanderdrückbar sind.

2. Verlegesystem nach Anspruch 1, dadurch gekennzeichnet, daß die Noppen (6,7) der Verlegefolie (2) einen im wesentlichen quadratischen Querschnitt aufweisen.

3. Verlegesystem nach Anspruch 1 oder 2, dadurch gekennzeichnet, daß die Elastizität der Noppen (6), die nicht den geringeren Querschnitt aufweisen, durch Auswahl des Folienmaterials und/oder ihrer Formgebung bedingt ist.

4. Verlegesystem nach einem der vorstehenden Ansprüche, dadurch gekennzeichnet, daß Ausgleichselemente (8,9) vorgesehen sind, die aus einer glatten, ungenoppten Ausgleichsdämmschicht (8) aus aufgeschäumtem Kunststoff, vorzugsweise Polystyrol, und einer tiefgezogenen Ausgleichsfolie (9) mit einer einseitigen Noppenreihe (10) bestehen, die (Noppen 10) gleich den Noppen (6) mit nicht geringerem Querschnitt sind.
